(19) Europäisches Patentamt
European Patent Office
Office européen des brevets

(11) EP 0 543 262 B1

(12) EUROPÄISCHE PATENTSCHRIFT

(45) Veröffentlichungstag und Bekanntmachung des Hinweises auf die Patenterteilung:
**11.09.1996 Patentblatt 1996/37**

(51) Int Cl.$^6$: **C08K 3/26**, C08L 67/02

(21) Anmeldenummer: **92119257.1**

(22) Anmeldetag: **11.11.1992**

(54) **Flammfeste thermoplastische Formmassen**

Flame retardant thermoplastic moulding masses

Masses à mouler thermoplastique ignifugées

(84) Benannte Vertragsstaaten:
**AT BE CH DE ES FR GB LI NL**

(30) Priorität: **22.11.1991 DE 4138386**

(43) Veröffentlichungstag der Anmeldung:
**26.05.1993 Patentblatt 1993/21**

(73) Patentinhaber: **BASF Aktiengesellschaft
67063 Ludwigshafen (DE)**

(72) Erfinder:
- **Gareiss, Brigitte, Dr.
W-6700 Ludwigshafen (DE)**
- **Schlichting, Karl, Dr.
W-6712 Bobenheim-Roxheim (DE)**

(56) Entgegenhaltungen:
**EP-A- 0 057 161**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 543 262 B1

Printed by Jouve, 75001 PARIS (FR)

## Beschreibung

Die vorliegende Erfindung betrifft thermoplastische Formmassen, enthaltend als wesentliche Komponenten

A) 30 bis 80 Gew.-% eines thermoplastischen Polyesters

und

B) 20 bis 70 Gew.-% einer Mischung aus

b$_1$) einem Magnesium-Calcium-Carbonat der allgemeinen
Formel $Mg_xCa_y(CO_3)_{x+y} \cdot m\ H_2O$,
wobei x und y Zahlen von 1 bis 5 bedeuten
und $x/y \geq 1$ gilt
und $m \geq 0$

und

b$_2$) einem basischen Magnesium-Carbonat der allgemeinen Formel
$Mg_n(CO_3)_v(OH)_{2n-2v} \cdot w\ H_2O$
wobei n eine Zahl von 1 bis 6 bedeutet,
v eine Zahl größer als 0 und kleiner als 6
und $n/v > 1$ gilt
und $w \geq 0$,

wobei das Mengenverhältnis von b$_1$):b$_2$) im Bereich von 1:1 bis 3:1 liegt.

Außerdem betrifft die Erfindung die Verwendung dieser thermoplastischen Formmassen zur Herstellung von Fasern, Folien und Formkörpern sowie die hierbei erhältlichen Formkörper aus den thermoplastischen Formmassen.

Thermoplastische Polyester werden in vielen unterschiedlichen Bereichen verwendet, z.B. im Automobilbereich, zur Herstellung von Gehäusen für Elektrogeräte oder im Bausektor.

Für viele Anwendungen ist es notwendig, daß die thermoplastischen Polyesterformmassen flammfest ausgerüstet sind. Übliche Flammschutzmittel, die die helle Eigenfarbe der Formmassen nicht beeinträchtigen, wie $Al(OH)_3$ oder $Mg(OH)_2$ sind für die Verwendung in thermoplastischen Polyesterformmassen nicht geeignet. $Al(OH)_3$ ist bei den für die Verarbeitung von Polyestern benötigten Temperaturen thermisch instabil, so daß bereits während des Einmischens Wasserabspaltung erfolgt. Bei der Verwendung von $Mg(OH)_2$ spalten sich, aufgrund der Basizität von $Mg(OH)_2$, während der Verarbeitung die Polyesterbindungen, wodurch die Viskosität drastisch reduziert wird.

Die EP-A 207 750 beschreibt die Verwendung von Magnesiumcarbonaten als Füllstoffe und Flammschutzmittel in Kunststoffen. Hierbei ist die flammhemmende Wirkung durch $CO_2$-Abspaltung jedoch nicht zufriedenstellend.

Aufgrund ihrer Basizität sind die in der japanischen Schrift 53104-650 beschriebenen Mischungen aus basischem Magnesium-Carbonat und Hydrodulcit sowie die in der japanischen Schrift 63210-165 beschriebenen basischen Magnesium-Carbonate als Flammschutzmittel für thermoplastische Polyester nicht geeignet, da sie - wie $Mg(OH)_2$ - zur Spaltung der Polyesterbindungen führen.

Aufgabe der vorliegenden Erfindung war es daher, flammfeste thermoplastische Polyesterformmassen zur Verfügung zu stellen, die gleichzeitig gute elektrische und mechanische Eigenschaften aufweisen.

Demgemäß wurden die eingangs definierten thermoplastischen Formmassen gefunden. Außerdem wurden deren Verwendung zur Herstellung von Fasern, Folien und Formkörpern sowie die hierbei erhältlichen Formkörper aus den thermoplastischen Formmassen gefunden.

Als Komponente A) enthalten die erfindungsgemäßen thermoplastischen Formmassen 30 bis 80 Gew.-%, bevorzugt 40 bis 70 Gew.-%, insbesondere 45 bis 65 Gew.-% eines thermoplastischen Polyesters.

Derartige Polyester sind an sich bekannt. Vorzugsweise werden Polyester verwendet, die einen aromatischen Ring in der Hauptkette enthalten. Der aromatische Ring kann auch substituiert sein, z.B. durch Halogene, wie Chlor und Brom und/oder durch $C_1$- bis $C_4$-Alkylgruppen, wie z.B. Methyl-, Ethyl-, i- bzw. n-Propyl- und i- bzw. n- bzw. t-Butylgruppen.

Die Herstellung der Polyester kann durch Reaktion von Dicarbonsäuren, deren Ester oder anderer esterbildender Derivate mit Dihydroxyverbindungen in an sich bekannter Weise erfolgen.

Als Dicarbonsäuren kommen beispielsweise aliphatische und aromatische Dicarbonsäuren in Frage, die auch als Mischung eingesetzt werden können. Nur beispielsweise seien hier Naphthalindicarbonsäuren, Terephthalsäure, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Als Dihydroxyverbindungen werden vorzugsweise Diole mit 2 bis 10 C-Atomen, besonders bevorzugt Ethylenglykol, 1,3-Propandiol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure oder Naphthalindicarbonsäuren und einer $C_2$- bis $C_6$-Diolkomponente, z.B. Polyethylenterephthalat, Polyethylennaphthalat, Polypropylenterephthalat oder Polybutylenterephthalat oder deren Mischungen werden besonders bevorzugt.

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (Du Pont).

Als Komponente B) enthalten die erfindungsgemäßen thermoplastischen Formmassen 20 bis 70 Gew.-%, bevorzugt 30 bis 60 Gew.-%, insbesondere 35 bis 55 Gew.-% einer Mischung aus

$b_1$) einem Magnesium-Calcium-Carbonat der allgemeinen Formel $Mg_xCa_y(CO_3)_{x+y} \cdot m\, H_2O$,
wobei x und y Zahlen von 1 bis 5 bedeuten
und $x/y \geq 1$ gilt
und $m \geq 0$

und

$b_2$) einem basischen Magnesium-Carbonat der allgemeinen Formel $Mg_n(CO_3)_v(OH)_{2n-2v} \cdot w\, H_2O$

wobei n eine Zahl von 1 bis 6 bedeutet,
v eine Zahl größer als 0 und kleiner als 6
und $n/v > 1$ gilt
und $w \geq 0$

erwiesen, wobei das Mengenverhältnis von $b_1$):$b_2$) im Bereich von 1:1 bis 3:1 liegt.

Die Magnesium-Calcium-Carbonate $b_1$) können sowohl wasserhaltig als auch wasserfrei sein. Bevorzugt sind die natürlich vorkommenden Mineralien wie Dolomit und Huntit. Besonders bevorzugt ist eine wasserfreie Form, in der x = 3 und y = 1 gilt, $Mg_3Ca(CO_3)_4$ (Huntit).

Die basischen Magnesiumcarbonate $b_2$) können ebenfalls sowohl in wasserhaltiger als auch wasserfreier Form eingesetzt werden. Auch hier sind die natürlich vorkommenden Mineralien wie Hydromagnesit, eine wasserhaltige Verbindung mit n = 5, v = 4 und w = 4, $Mg_5(CO_3)_4(OH)_2 \cdot 4\, H_2O$ bevorzugt.

Besonders bevorzugt liegt das Verhältnis von $b_1$):$b_2$) im Bereich von 1:1 bis 2:1.

Neben den Komponenten A) und B) können die erfindungsgemäßen Formmassen noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluorethylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße $d_{50}$ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wäßrigen Dispersionen von fluorhaltigen Ethylenpo-Teilchengrößen lassen sich besonders bevorzugt durch Verwendung von wäßrigen Dispersionen von fluorhaltigen Ethylenpolymerisaten und deren Einarbeitung in eine Polyesterschmelze erzielen.

Weiterhin können die erfindungsgemäßen thermoplastischen Formmassen 0 bis 40 Gew.-% faser- oder teilchengröße Füllstoffe oder deren Mischungen enthalten, die natürlich von der Komponente B) verschieden sind. In der Regel sind dies übliche Zusatzstoffe und Verarbeitungshilfsmittel wie Stabilisatoren, Oxidationsverzögerer, Mittel gegen Wärmezersetzung, Färbemittel wie Farbstoffe und Pigmente, faser- und pulverförmige Füll- und Verstärkungsmittel, Keimbildungsmittel, Weichmacher usw.

Als Beispiele für Oxidationsverzögerer und Wärmestabilisatoren sind Halogenide von Metallen der Gruppe I des periodischen Systems, z.B. Natrium-, Kalium- und/oder Lithium-halogenide, ggf. in Verbindung mit Kupfer-(I)-Halogeniden, z.B. Chloriden, Bromiden, Iodiden, sterisch gehinderte Phenole, Hydrochinone, aromatische sekundäre Amine wie Diphenylamine, verschiedene substituierte Vertreter dieser Gruppen und deren Mischungen in Konzentrationen

bis zu 1 Gew.-%, bezogen auf das Gewicht der thermoplastischen Formmasse genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern, Glasfasern, amorphe Kieselsäure, Asbest, Calcium-silicat (Wollastonit), Aluminiumsilicat, Magnesiumcarbonat, Kaolin, Kreide, gepulverter Quarz, Glimmer und Feldspat. Der Anteil derartiger Füll- und Farbstoffe beträgt im allgemeinen bis zu 40 Gew.-%, bevorzugt bis zu 30 Gew.-%, insbesondere bis zu 25 Gew.-%.

Als Keimbildungsmittel können z.B. Talkum, Calciumfluorid, Natriumphenylphosphinat, Aluminiumoxid und feinteiliges Polytetrafluorethylen eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Zur besseren Verträglichkeit mit dem thermoplastischen Polyester sind Minerale und Füllstoffe gegebenenfalls mit einem Haftvermittler ausgerüstet. Bevorzugt sind Glycidyl-, Vinyl- und Aminoalkyltrialkoxysilane.

Weiterhin können die erfindungsgemäßen thermoplastischen Formmassen 0 bis 60, vorzugsweise 0 bis 40 Gew.-% eines schlagzäh modifizierenden Polymeren (im folgenden auch als kautschukelastisches Polymerisat oder Elastomer bezeichnet) enthalten.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien-5-ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

$$R^1C(COOR^2)=C(COOR^3)R^4 \qquad (I)$$

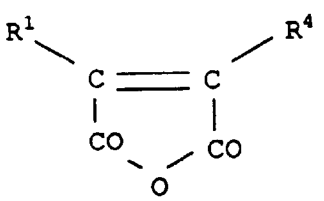

(II)

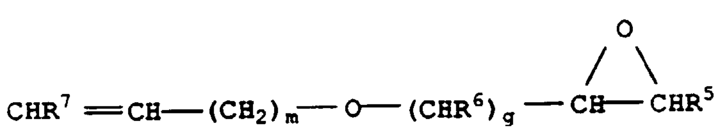

(III)

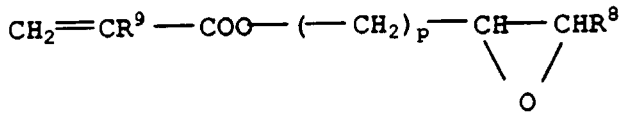

(IV)

wobei $R^1$ bis $R^9$ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste $R^1$ bis $R^9$ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus

50 bis 98, insbesondere 55 bis 95 Gew.-% Ethylen,

0,1 bis 40, insbesondere 0,3 bis 20 Gew.-% Glycidylacrylat und/oder Glycidylmethacrylat, (Meth)acrylsäure und/oder Maleinsäureanhydrid, und

1 bis 45, insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen gruppen sowie funktionelle Gruppen, die durch Mitverwendung von Monomeren der allgemeinen Formel

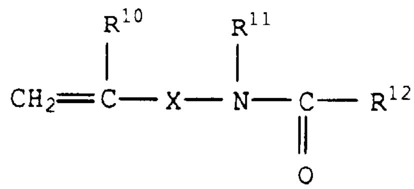

eingeführt werden können,
wobei die Substituenten folgende Bedeutung haben können:

$R^{10}$ Wasserstoff oder eine $C_1$- bis $C_4$-Alkylgruppe,

$R^{11}$ Wasserstoff, eine $C_1$- bis $C_8$-Alkylgruppe oder eine Arylgruppe, insbesondere Phenyl,

$R^{12}$ Wasserstoff, eine $C_1$- bis $C_{10}$-Alkyl-, eine $C_6$- bis $C_{12}$-Arylqruppe oder $-OR^{13}$

$R^{13}$ eine $C_1$- bis $C_8$-Alkyl- oder $C_6$- bis $C_{12}$-Arylgruppe, die gegebenenfalls mit O- oder N-haltigen Gruppen substituiert sein können,

x eine chemische Bindung, eine $C_1$- bis $C_{10}$-Alkylen- oder $C_6$-$C_{12}$-Arylenqruppe oder

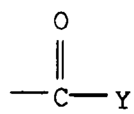

y O-Z oder NH-Z und

Z eine $C_1$- bis $C_{10}$-Alkylen- oder $C_6$- bis $C_{12}$-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino) -methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graft-linking monomers) verwendet werden, d. h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butyl-acrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Weitere bevorzugte Kautschuke sind Polyurethane, wie in den EP-A 115 846, EP-A 115 847, EP-A 116 456, EP-A 117 664 und der EP-A 327 384 beschrieben. Kommerziell im Handel sind solche Produkte z.B. unter den Bezeichnungen Desmopan® (Bayer AG) oder Elastollan® (Elastogran Polyurethane GmbH) erhältlich.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 290°C.

Die erfindungsgemäßen thermoplastischen Formmassen zeichnen sich durch Flammfestigkeit bei gleichzeitig guten mechanischen und elektrischen Eigenschaften aus. Sie eignen sich zur Herstellung von Fasern, Folien und Formkörpern.

Beispiele

Herstellung der thermoplastischen Formmassen

Beispiel 1 und 2

Ein Polybutylenterephthalat mit einem mittleren Molekulargewicht $\overline{M}_n$ (Zahlenmittelwert) von 25.000 und einer Viskositätszahl von 125 ml/g (gemessen an einer 0,5 gew.-%igen Lösung in Phenol/o-Dichlorbenzol (Gewichtsverhältnis 1:1)) (Ultradur® B 4500 der BASF AG) (Komponente A)) wurde mit einer Mischung aus $Mg_3Ca(CO_3)_4$ (Huntit) und $Mg_5(CO_3)_4(OH)_2 \cdot 4\ H_2O$ (Hydromagnesit) (Gew.-Verhältnis Huntit:Hydromagnesit = 2:1) (Komponente B)) auf einem Zweiwellenextruder (ZSK 53 der Firma Werner & Pfleiderer) bei 260°C gemischt (30 kg/h Durchsatz, 120 U/min), extrudiert, gekühlt, granuliert, getrocknet (80°C, Vakuum, 8 Stunden) und anschließend bei 260°C zu Probekörpern verspritzt.

Beispiel 3

Es wurde wie in den Beispielen 1 und 2 gearbeitet, jedoch unter der Zugabe von Endlosglasfasern mit einem Durchmesser von 10 µm.

Vergleichsbeispiele V1 bis V3

Es wurde wie in den Beispielen 1 und 2 gearbeitet, jedoch statt der Komponente B) entweder nur Hydromagnesit (V1) oder nur Huntit (V2) oder $Mg(OH)_2$ (V3) zugegeben.

Die Zusammensetzungen und die Eigenschaften sind in der Tabelle zusammengestellt.

Die Viskositätszahl VZ wurde an einer 0,5 gew.-%igen Lösung in Phenol/o-Dichlorbenzol (Gew.-Verhältis 1:1) bestimmt. Der Elastizitätsmodul (E-Modul) wurde nach DIN 53 457 bestimmt, die Schlagzähigkeit $a_n$ nach DIN 53 453 und die Zugfestigkeit nach DIN 53 455. Die Bestimmung der Kriechstromfestigkeit (CTI) erfolgte nach DIN 112, ASTM-D 3638.

Die Flammschutzprüfung erfolgte im vertikalen Brandtest nach den Vorschriften der Underwriter Laboratories. Als Testkörper wurden Brandstäbe mit 1/8" und 1/16" Dicke verwendet. Ein Satz von 5 Proben der Abmessungen 127 mm x 12,7 mm x 1,7 mm wurde je zweimal für 10 Sekunden mit einer offenen Flamme (Flammhöhe 19 mm) beflammt. Bei allen Proben wurde die Nachbrenndauer bei jeder Beflammung gemessen, wodurch die Einordnung in die verschiedenen Brandklassen erfolgte.

Tabelle

| Beispiel | Zusammensetzung [Gew.-%] | | | | | | VZ | E-Modul | $a_n$ | Zug-festig-keit | CTI | Brandtest | |
|---|---|---|---|---|---|---|---|---|---|---|---|---|---|
| | A) | B) | Glas-faser | Hydro-magnesit | Huntit | $Mg(OH)_2$ | [ml/g] | [N/mm²] | [kJ/m²] | [N/mm²] | [Volt] | 1/8" | 1/16" |
| 1 | 60 | 40 | - | - | - | - | 125 | 6400 | 25 | 50 | 550 | V-1 | V-2 |
| 2 | 55 | 45 | - | - | - | - | 128 | 7000 | 14 | 45 | 550 | V-0 | V-0 |
| 3 | 45 | 45 | 10 | - | - | - | 125 | 10.000 | 10 | 65 | 500 | V-0 | V-0 |
| V1 | 55 | - | - | 45 | - | - | 80 | 6.500 | 4 | 30 | - | - | - |
| V2 | 55 | - | - | - | 45 | - | 125 | 7.000 | 10 | 35 | - | V- | V- |
| V3 | 55 | - | - | - | - | 45 | nicht konfektionierbar | | | | | | |

**Patentansprüche**

1. Thermoplastische Formmassen, enthaltend als wesentliche Komponenten

   A) 30 bis 80 Gew.-% eines thermoplastischen Polyesters und

   B) 20 bis 70 Gew.-% einer Mischung aus

      $b_1$) einem Magnesium-Calcium-Carbonat der allgemeinen Formel

$$Mg_xca_y(CO_3)_{x-y} \cdot m\ H_2O,$$

      wobei x und y Zahlen von 1 bis 5 bedeuten
      und $x/y \geq 1$ gilt
      und $m \geq 0$
      und

      $b_2$) einem basischen Magnesium-Carbonat der allgemeinen Formel

$$Mg_n(CO_3)_v(OH)_{2n-2v} \cdot w\ H_2O$$

      wobein eine Zahl von 1 bis 6 bedeutet,
      v eine Zahl größer als 0 und kleiner als 6 und $n/v > 1$ gilt

      und $w \geq 0$,

   wobei das Mengenverhältnis von $b_1$):$b_2$) im Bereich von 1:1 bis 3:1 liegt.

2. Thermoplastische Formmassen nach Anspruch 1, dadurch gekennzeichnet, daß die Komponente A) in einer Menge von 40 bis 70 Gew.-% und die Komponente B) in einer Menge von 30 bis 60 Gew.-% eingesetzt wird.

3. Thermoplastische Formmassen nach den Ansprüchen 1 bis 2, dadurch gekennzeichnet, daß das Mengenverhältnis von $b_1$) :$b_2$) im Bereich von 1:1 bis 2:1 liegt.

4. Verwendung der thermoplastischen Formmassen gemäß den Ansprüchen 1 bis 3 zur Herstellung von Fasern, Folien und Formkörpern.

5. Formkörper, erhältlich aus den thermoplastischen Formmassen gemäß den Ansprüchen 1 bis 3 als wesentliche Komponente.

**Claims**

1. A thermoplastic molding material containing, as essential components,

   A) from 30 to 80% by weight of a thermoplastic polyester

   and

   B) from 20 to 70% by weight of a mixture of

      $b_1$) a magnesium calcium carbonate of the formula

$$Mg_xCA_y(CO_3)_{x+y} \cdot m\ H_2O,$$

      where x and y are each from 1 to 5,
      $x/y \geq 1$ and
      $m \geq 0$, and
      $b_2$) a basic magnesium carbonate of the formula

$$Mg_n(CO_3)_v(OH)_{2n-2v} \cdot w\, H_2O,$$

where n is from 1 to 6,
v is greater than 0 and less than 6,
$n/v > 1$ and
$w \geq 0$,

the ratio of $b_1$) to $b_2$) being from 1 : 1 to 3 : 1.

**2.** A thermoplastic molding material as claimed in claim 1, wherein

component A) is used in an amount of from 40 to 70% by weight and
component B) is used in an amount of from 30 to 60% by weight.

**3.** A thermoplastic molding material as claimed in claim 1 or 2, wherein the ratio of $b_1$) to $b_2$) is from 1 : 1 to 2 : 1.

**4.** The use of a thermoplastic molding material as claimed in any of claims 1 to 3 for the production of fibers, films and moldings.

**5.** A molding obtainable from the thermoplastic molding material as claimed in any of claims 1 to 3 as an essential component.

**Revendications**

**1.** Masses à mouler thermoplastiques, contenant, comme composants essentiels,

A) 30 à 80% en poids d'un polyester thermoplastique

et

B) 20 à 70% en poids d'un mélange

$b_1$) d'un carbonate de magnésium et de calcium de formule générale

$$Mg_xCa_y(CO_3)_{x+y} \,.\, m\, H_2O,$$

x et y représentant des nombres de 1 à 5,
avec $x/y \geq 1$
et m étant égal ou supérieur à 0,

et

$b_2$) d'un carbonate de magnésium basique de formule générale

$$Mg_n(CO_3)_v(OH)_{2n-2v} \cdot w\, H_2O,$$

n représentant un nombre de 1 à 6,
v étant un nombre supérieur à 0 et inférieur à 6
avec $n/v > 1$
et w étant égal ou supérieur à 0,

le rapport de quantité de $b_1$) à $b_2$) se situant dans la gamme de 1:1 à 3:1.

**2.** Masses à mouler thermoplastiques selon la revendication 1, caractérisées en ce que

le composant A) est utilisé dans une proportion de 40 à 70% en poids et
le composant B) dans une proportion de 30 à 60% en poids.

**3.** Masses à mouler thermoplastiques selon la revendication 1 ou 2, caractérisées en ce que le rapport de quantité

de $b_1$) à $b_2$) se situe dans la gamme de 1:1 à 2:1.

**4.** Utilisation des masses à mouler thermoplastiques selon l'une quelconque des revendications 1 à 3 pour la fabrication de fibres, de feuilles et de corps moulés.

**5.** Corps moulée, obtenus à partir des masses à mouler thermoplastiques selon l'une quelconque des revendications 1 à 3 en tant que composants essentiels.